# EUROPEAN PATENT APPLICATION

(11) **EP 1 630 447 A1**
(43) Date of publication of application: **01.03.2006**
(21) Application number: 05291726.7
(22) Date of filing: 12.08.2005
(51) Int. Cl.: F16F 1/54, B60K 5/12

(54) **Antivibration mount and method of manufacturing the same**

(30) Priority: 24.08.2004 US 924509
(71) Applicant: Paulstra CRC, Grand Rapids, MI 49501 (US)
(72) Inventor: Thibault, Bertrand, c/o Paulstra CRC, Grand Rapids, Michigan 49501 (US); Noe, Frédéric, c/o Paulstra CRC, Grand Rapids, Michigan 49501 (US)
(74) Representative: Burbaud, Eric

(57) **Abstract**

Antivibration mount (1) adapted to be interposed between a first member (100) such as a vehicle frame and a second member (200) such as an engine component, that mount comprising an inner rigid element (2), an outer rigid element (3) and an elastomer body (5) connecting the inner (2) and outer (3) elements together and supporting the inner element in the outer element, wherein:
- the inner element extends in a first direction (X), intended to be substantially horizontal in a vehicle, and is adapted to be secured to the second member and to support the same along a second direction (Z) intended to be substantially vertical,
- the outer element is adapted to be secured to the first member and comprises interlocking means which limit the displacements of the inner element in the outer element, in the first and second directions, as well as in a third direction (Y) which is substantially perpendicular to the first and second directions.

## Description

### FIELD OF THE INVENTION

The invention relates to antivibration mounts and methods of manufacturing such mounts.

### BACKGROUND OF THE INVENTION

More precisely, the invention relates to an antivibration mount adapted to be interposed between a first member such as a vehicle frame and a second member such as an engine component. These first and second members undergo relative vibratory motions parallel to two substantially horizontal directions and to a substantially vertical direction. This kind of mount supports the second member on the first member and damps the vibratory motions.

Such antivibration mounts are known in the art.

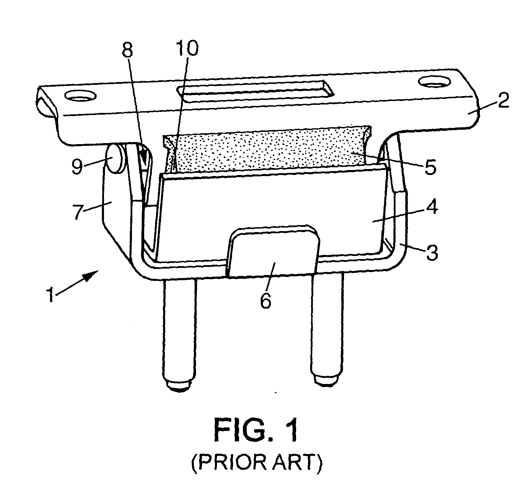

For instance, as shown in FIG. 1 of the drawings, a well known antivibration mount 1 of this type comprises an inner rigid element 2, an outer rigid element 3, an intermediate armature 4, an elastomer body 5 connecting the inner element 2 and the intermediate armature 4 together. The outer element 3 comprises clamp straps 6 which retain the intermediate armature 4 and two legs 7 between which a tube-shaped part 8 of the inner element 2 is inserted, a restraining pin 9 passing through the tube-shaped part 8, along its longitudinal axis, between the two legs 7.

The elastomer body 5 has two thick arms 10 able to withstand part of the weight of the second member, such as an engine part.

The elastomer body 5 enables relative movements between the inner 2 and outer 3 elements parallel to three directions perpendicular one to the other. The legs 7 restrain the inner element displacements in a first substantially horizontal direction. The restraining pin 9 restrains the inner element displacements in a second direction which is substantially vertical. The intermediate armature 4 restrains the inner element displacements in a third direction which is substantially perpendicular to the first and second directions.

### OBJECTS AND SUMMARY OF THE INVENTION

An objective of the present invention is to provide an antivibration mount for a cost as limited as possible.

To this end, according to the invention, an antivibration mount is adapted to be interposed between a first member such as a vehicle frame and a second member such an engine component and comprises an inner rigid element, an outer rigid element and an elastomer body connecting the inner and outer elements together and supporting the inner element in the outer element. In this mount:
- the inner element extends in a first direction, intended to be substantially horizontal in a vehicle, and is adapted to be secured to the second member and to support the same along a second direction intended to be substantially vertical,
- the outer element is adapted to be secured to the first member and comprises interlocking means which limit the displacements of the inner element in the outer element, in the first and second directions, as well as in a third direction which is substantially perpendicular to the first and second directions.

Thanks to these dispositions, the antivibration mount according to the invention does not comprise, in particular, neither an intermediate armature nor a restraining pin. Consequently, the antivibration mount according to the invention is rather simple and include less components than the prior art mounts, so that it can be manufactured at a reasonable cost.

In various embodiments of the invention, one may possibly have recourse in addition to one and/or other of the following arrangements:
- the outer element forms a sleeve extending longitudinally in the first direction and completely surrounding a longitudinal part of the inner element;
- the outer element has a lower wall, two lateral walls and an upper wall with longitudinal ends each of which having a notch, these two notches being separated by a bridge extending, between the lateral walls, parallel to the third direction, such that the bridge has two edges extending substantially parallel to the third direction, and the inner element has a V-shape, viewed from a lateral side, with two arms extending on both sides of the bridge, such that the bridge edges constitute stops limiting the inner element displacements parallel to the first direction;
- the outer element consists in a single blank which is bent in order to join two parts of it thereby forming the upper wall;
- these parts are welded on a line extending substantially parallel to the first direction;
- these parts overlap;
- these parts are joined together with a dovetail link;
- the outer element consists in a single blank which is bent in order to have two parts of it overlapped thereby forming the lower wall;
- the outer element has a lower wall and two lateral walls extending longitudinally in the first direction, at least one of the lateral walls having at least one opening, and the inner element extends longitudinally substantially in the first direction and has at least one lug extending, through said at least one opening, substantially parallel to the third direction, opening edges constituting stops limiting the inner element displacements parallel to the first direction;
- the outer element has a lower wall and two lateral walls extending longitudinally in the first direction, at least one of the lateral walls having at least two notches being separated by a bridge and the inner element extends longitudinally substantially in the first direction and has at least two lugs extending on both sides of the bridge, substantially parallel to the third direction, bridge edges constituting stops limiting the inner element displacements parallel to the first direction; and
- the inner or outer element is a stamped metal piece but as a variant the inner or outer element is in metal casting.

According to another aspect of the invention, the invention relates to a method of manufacturing an antivibration mount adapted to be interposed between a first member such as a vehicle frame and a second member such as an engine component, that method comprising
- providing an inner rigid element which extends in a first direction, intended to be substantially horizontal in a vehicle, and is adapted to be secured to the second element and to support the same along a second direction intended to be substantially vertical,
- providing an outer rigid element which is adapted to be secured to the first element,
- interlocking the inner and outer elements,
- molding an elastomer body to connect the inner and outer elements together and to support the inner element in the outer element.

In this document, "interlocked" means in particular that the inner element is restrained in the outer element in all the directions.

In various implementations of the method according to the invention, one may possibly have recourse in addition to one and/or other of the following steps:
- parts of the outer element are bent in order to interlock the inner element in the outer element;
- parts of the outer element are welded; and
- parts of the outer element are linked with a dovetail.

### BRIEF DESCRIPTION OF THE DRAWINGS

Other characteristics and advantages of the invention appear from the following detailed description of several embodiments, given by way of non-limiting examples, and with references to the accompanying drawings.

In the drawings:
- FIG.1 is a perspective view illustrating a prior art antivibration mount;
- FIG.2 is a perspective view illustrating a first embodiment of an antivibration mount according to the invention, between a vehicle frame and a part of a gearbox of this vehicle;
- FIG.3 is a perspective view illustrating the mount of FIG.2;
- FIG.4 is a perspective view illustrating the inner element of the mount of FIG.2 and FIG.3;
- FIG.5 is a perspective view illustrating the outer element of the mount of FIG.2 and FIG.3;
- FIG.6 is a section view of the mount of FIG.3, taken along the line VI-VI of FIG.7;
- FIG.7 is a section view of the mount of FIG.3, taken along the line VII-VII of FIG.6;
- FIG.8 is a top view of the mount of FIG.3;
- FIG.9 is a diagrammatic perspective of a second embodiment of the invention;
- FIG.10 is a diagrammatic perspective of a third embodiment of the invention;
- FIG.11 is a diagrammatic perspective of a fourth embodiment of the invention;
- FIG.12 is a diagrammatic perspective of a fifth embodiment of the invention; and
- FIG.13 is a diagrammatic perspective of a sixth embodiment of the invention.

In the figures, the same references denote identical or similar elements.

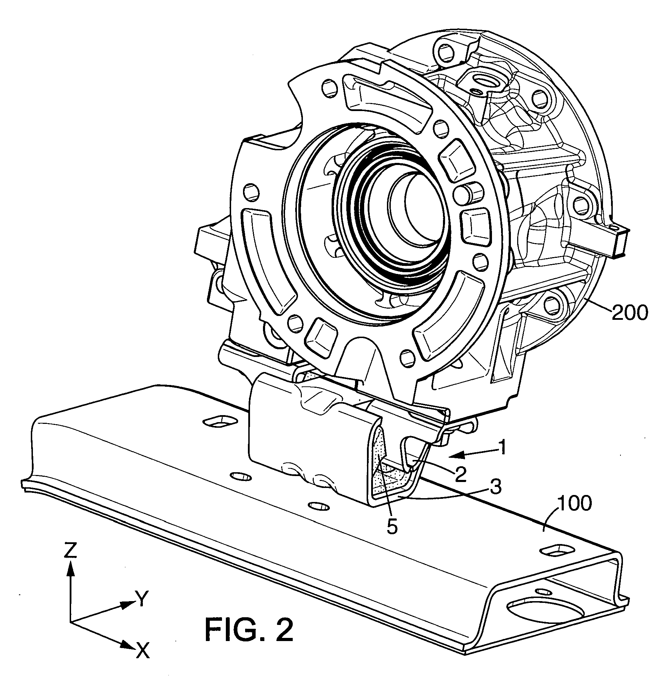

A first embodiment is described above in relation to FIGS.2-8.

As shown in FIG.2, the invention concerns an antivibration mount 1 which is adapted to be interposed between first 100 and second 200 members. For example, the first member 100 is a vehicle frame and the second member 200 is a part of a gearbox. The first 100 and the second 200 members undergo relative vibratory motions along a substantially horizontal first direction X, along a substantially vertical second direction Z and along a substantially horizontal third direction Y.

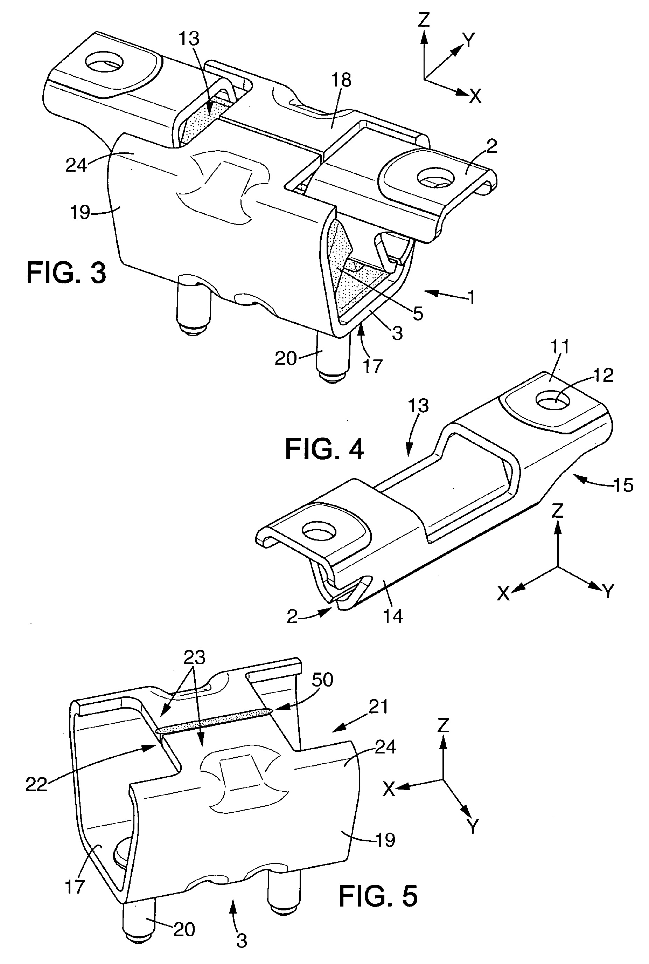

As shown in FIGS. 2 and 3, the mount 1 comprises an inner rigid element 2, an outer rigid element 3 and an elastomer body 5 connecting the inner 2 and outer 3 elements together and supporting the inner element 2 in the outer element 3.

The inner element 2 is adapted to be fixed to the second member 200. The outer element is adapted to be fixed to the first member 100.

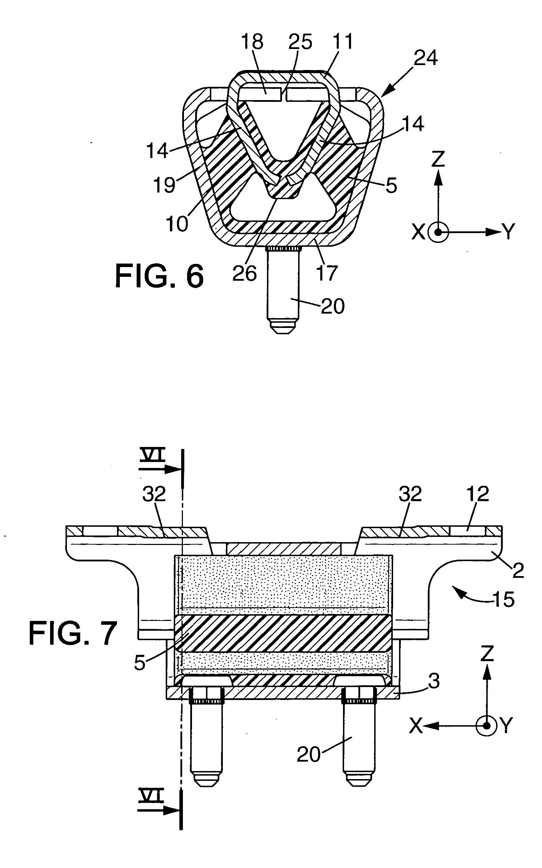

As shown in FIG.4, the inner element 2 extends in a first direction X. The inner element 2 is made of a single metal blank which has been stamped and bent. The inner element 2 is substantially tube-shaped with a substantially triangular transverse cross section (see also FIG.6). The longitudinal blank edges are joined together in the lower corner of this triangular section tube. This triangular section tube has an upper flange 11 with two holes 12 forming screw passages for the fastening to the second member 200, and a central opening 13 that extends on a part of the lateral flanges 14. The inner element 2 also comprises notches 15 at its longitudinal ends such that the inner element 2 has a V-shape when viewed from lateral elevation. (see also FIG.7), with two arms 32.

The outer element 3 consists in a single blank which has been stamped and bent in order to form a tube with a trapezoidal transverse cross section (see also FIG.6), with a lower wall 17 corresponding to the smaller side, an upper wall 18 where the blank edges have been joined and to lateral wall 19 extending from the lower wall 17 to the upper wall 18. The outer element 2 forms a sleeve which completely surrounds the part of the inner element 2 comprising the opening 13. Two pins extend from the lower wall 17. These pins 20 allow to secure the mount 1 on the first member 100.

As shown in FIG.5, the upper wall 17 has a notch 21 at each of its longitudinal ends. A bridge 22 extends between the two lateral walls 19, parallel to the third direction Y and separates the two notches 21.

The bridge 22 is formed of two parts 23 of the blank constituting the outer element 3 extending from the lateral walls 19 and joining substantially on the centre line of the upper wall 18. In this first embodiment, the longitudinal edges 25 of the bridge parts 23 have been welded. The weld is shown as 50 in FIG.5.

The edges 24 of the tube constituting the outer element 3 have been deformed in order to make more rigid the outer element 3.

As shown on FIGS.6-8, the inner 2 and outer 3 elements are interlocked. The inner element 2 is hung in the outer element 3 by the elastomer body 5. The elastomer body 5 is overmolded and bounded to the inner 2 and outer 3 elements. The elastomer body 5 essentially forms two thick arms 10 extending between the lateral flanges 14 and the lateral walls 19 and parallel to the first direction X. The arms 10 also damp the motions of the inner element 2 relatively to the outer element 3, both in the second Z and third Y directions. The elastomer body 5 further comprises a protrusion 26 extending from the lower corner of the inner element 2 towards the lower wall 17 of the outer element 3. This protrusion 26 is adapted to limit and damp the vertical motions in the second direction Z when the inner 2 and outer 3 elements move closer to each other.

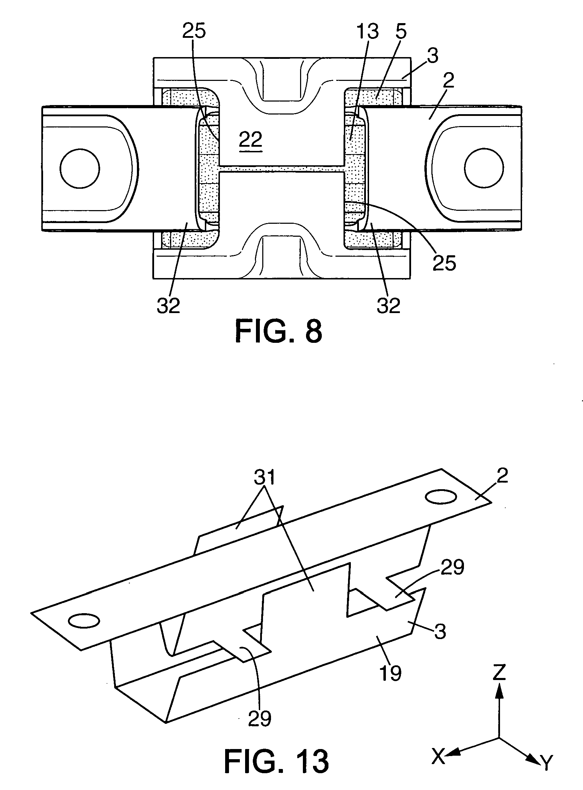

The inner 2 and outer 3 elements are interlocked, i.e. the outer element 3 limits the inner element 2 displacements:
- in the first direction X, thanks to the bridge longitudinal edges 25 (see FIG.8) which can stop the inner element arms 32,
- in the second direction Z, thanks to the lower 17 and upper 18 walls (see FIGS.6 and 8), and
- in the third direction Y, thanks to the lateral walls 19 (see FIG.6).

The antivibration mount 1 according to the invention is very compact, especially in the vertical direction Z. It should be noted that the elastomer body 5 never works in traction, with a positive impact on its lifetime.

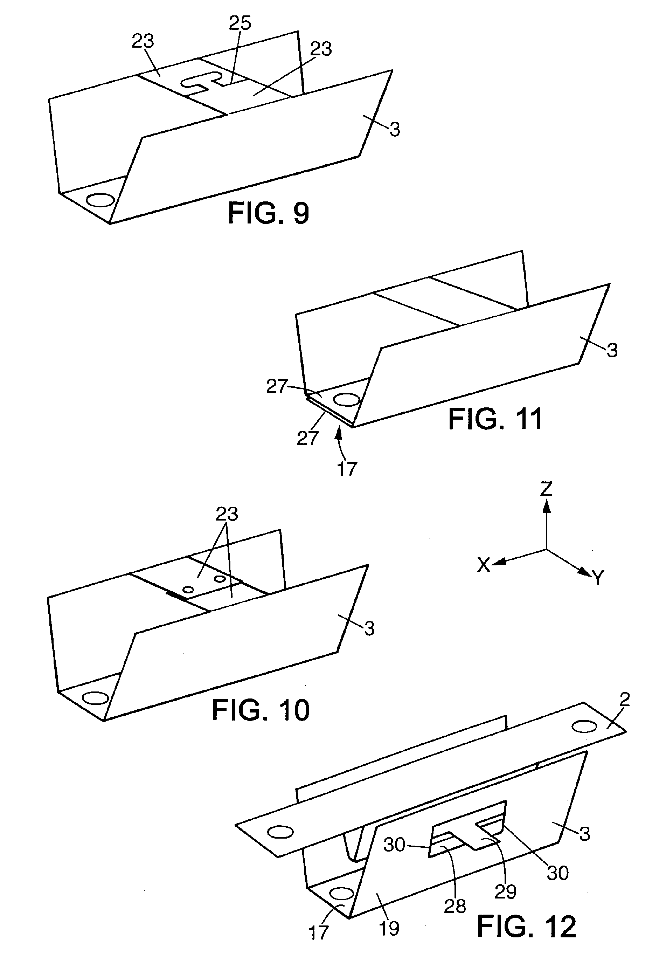

In a second embodiment shown in FIG.9, the longitudinal edges 25 of the parts 23 are not welded, they are linked with a dovetail.

According to a third embodiment shown in FIG.10, the bridge parts 23 overlap and are welded in the overlapping area.

According to a fourth embodiment shown in FIG.11, the bridge is constituted by a single part but the lower wall 17 is formed with to overlapping areas 27.

According to a fifth embodiment shown in FIG.12, the outer element 3 has only a lower wall 17 and two lateral walls 19 extending longitudinally in the first direction X. Each one of the lateral walls 19 has an opening 28. The inner element 2 extends longitudinally substantially in the first direction X too. The inner element 2 has two lugs 29. Each lug 29 extends through one opening 28 substantially parallel to the third direction Y. The opening edges 30 constitute stops limiting the inner element displacements parallel to the first direction X. Consequently, the inner and outer elements are interlocked.

According to a sixth embodiment shown in FIG.13, the bridge 22 of the first embodiment is replaced by two bridges 31, each one of these two bridges 21 being on a lateral wall 19. In this case, the inner element 2 comprises two pairs of lugs 29. The two lugs 29 of each pair extend on both sides of a bridge 31, substantially parallel to the third direction Y. Consequently, the inner and outer elements are interlocked.

In another embodiment not shown, the inner and/or outer elements can be in metal casting.

## Claims

1. Antivibration mount adapted to be interposed between a first member such as a vehicle frame and a second member such as an engine component, that mount comprising an inner rigid element, an outer rigid element and an elastomer body connecting the inner and outer elements together and supporting the inner element in the outer element, wherein:
- the inner element extends in a first direction, intended to be substantially horizontal in a vehicle, and is adapted to be secured to the second member and to support the same along a second direction intended to be substantially vertical,
- the outer element is adapted to be secured to the first member and comprises interlocking means which limit the displacements of the inner element in the outer element, in the first and second directions, as well as in a third direction which is substantially perpendicular to the first and second directions.

2. Mount according to claim 1, wherein said outer element forms a sleeve extending longitudinally in the first direction and completely surrounding a longitudinal part of the inner element.

3. Mount according to claim 2, wherein
- the outer element has a lower wall, two lateral walls and an upper wall with longitudinal ends each of which having a notch, these two notches being separated by a bridge extending, between the lateral walls, parallel to the third direction, such that the bridge has two edges extending substantially parallel to said third direction, and
- the inner element has a V-shape, viewed from a lateral side, with two arms extending on both sides of the bridge, such that the bridge edges constitute stops limiting the inner element displacements parallel to the first direction.

4. Mount according to claim 3, wherein the outer element consists in a single blank which is bent in order to join two parts of it thereby forming said upper wall.

5. Mount according to claim 2, wherein said parts are welded on a line extending substantially parallel to the first direction.

6. Mount according to any of claims 4 and 5, wherein said parts overlap.

7. Mount according to claim 4, wherein said parts are joined together with a dovetail link.

8. Mount according claim 2, wherein the outer element consists in a single blank which is bent in order to have two parts of it overlapped thereby forming the lower wall.

9. Mount according to claim 1, wherein
- said outer element has a lower wall and two lateral walls extending longitudinally in the first direction, at least one of the lateral walls having at least one opening, and
- said inner element extends longitudinally substantially in the first direction and has at least one lug extending, through said at least one opening substantially parallel to the third direction, opening edges constituting stops limiting the inner element displacements parallel to the first direction.

10. Mount according to claim 1, wherein
- said outer element has a lower wall and two lateral walls extending longitudinally in the first direction, at least one of the lateral walls having at least two notches being separated by a bridge
- and said inner element extends longitudinally substantially in the first direction and has at least two lugs extending on both sides of said bridge, substantially parallel to the third direction, bridge edges constituting stops limiting the inner element displacements parallel to the first direction.

11. Mount according to claim 1, 2, 9 or 10, wherein said inner or outer element is a stamped metal piece.

12. Method of manufacturing an antivibration mount adapted to be interposed between a first member such as a vehicle frame and a second member such as an engine component, that method comprising
- providing an inner rigid element which extends in a first direction, intended to be substantially horizontal in a vehicle, and is adapted to be secured to the second element and to support the same along a second direction intended to be substantially vertical,
- providing an outer rigid element which is adapted to be secured to the first element,
- interlocking the inner and outer elements,
- molding an elastomer body to connect the inner and outer elements together and to support the inner element in the outer element.

13. Method according to claim 12, comprising bending parts of the outer element in order to interlock the inner element in the outer element.

14. Method according to claim 13, comprising welding parts of the outer element.

15. Method according to claim 13, comprising linking parts of the outer element with a dovetail.
